# EUROPÄISCHE PATENTSCHRIFT

(11) **EP 2 147 840 B1**
(45) Veröffentlichungstag und Bekanntmachung des Hinweises auf die Patenterteilung: **02.03.2011**
(21) Anmeldenummer: 09009548.0
(22) Anmeldetag: 23.07.2009
(51) Int. Cl.: B60T 8/17, B60T 17/22, B60T 8/172

(54) **Verfahren und Einrichtung zur adaptiven Ansteuerung der Gleitschutzregelung einer pneumatischen Bremsanlage eines Schienenfahrzeuges**
Method and device for adaptive control of the anti-skid regulation of a pneumatic braking assembly of a rail vehicle
Procédé et dispositif de commande adaptative du réglage antiblocage d'une installation de frein pneumatique d'un véhicule sur rails

(30) Priorität: 25.07.2008 DE 102008034657
(43) Veröffentlichungstag der Anmeldung: 27.01.2010
(73) Patentinhaber: KNORR-BREMSE Systeme für Schienenfahrzeuge GmbH, 80809 München (DE)
(72) Erfinder: Kovács, Roland, 1226 Budapest (HU); Brezvai, Sándor, 5000 Szolnok (HU); Balogh, Bernabás, 2100 Gödöllö (HU); Horváth, Gábor Zsolt, 1204 Budapest (HU)
(74) Vertreter: Schönmann, Kurt

(56) Entgegenhaltungen:
- WO-A-82/04020
- WO-A-2006/113954
- DE-A1- 2 530 609
- DE-A1- 10 010 221
- US-A1- 2004 133 377

## Beschreibung

Die vorliegende Erfindung betrifft ein Verfahren sowie eine elektronische Einrichtung zur adaptiven Ansteuerung einer pneumatischen Bremsanlage eines Schienenfahrzeuges über eine Gleitschutzregelung, mit welcher das Blockieren von Rädern des Schienenfahrzeuges bei ungünstigen Adhäsionsbedingungen im Rad-Schiene-Kontakt verhindert wird, indem die Bremsanlage durch die Gleitschutzregelung nach Maßgabe eines vorggebbaren relativen Schlupfs geregelt wird.

Gleitschutzregelungen werden im Bereich des Schienenfahrzeugbaus dafür verwendet, ein Blockieren gebremster Räder, insbesondere bei ungünstigen Adhäsionsverhältnissen zu verhindern. Abhängig von der Größe des ungünstigen Adhäsionsverhältnisses können durch die Schienenfahrzeuge so durchaus die vorgeschriebenen Bremswege eingehalten werden. Jedoch beeinflusst die Art der zwischen Rad und Schiene befindlichen Verschmutzung signifikant die Parameter der Gleitschutzsteuerung, um einen optimalen Rad-Schiene-Kontakt herzustellen und einen möglichst kurzen Bremsweg zu gewährleisten.

Im Allgemeinen verwendet eine Gleitschutzregelung die Größe Schlupf als Führungsgröße der Regelung. Der Schlupf ist definiert als die Differenz zwischen der Radumdrehungsgeschwindigkeit und der translatorischen Fahrzeuggeschwindigkeit. Wird der Schlupf auf die translatorische Fahrzeuggeschwindigkeit bezogen, so spricht man auch von relativem Schlupf, der gewöhnlich in Prozentwerten angegeben wird. Der für die Regelung benötigte Sollwert des Schlupfes wird durch Multiplikation der Referenzgeschwindigkeit mit einer Konstanten fest eingestellt, d. h. bei dem relativen Schlupf auf einen festen Prozentsatz. Die Referenzgeschwindigkeit sollte im Idealfall der tatsächlichen translatorischen Fahrzeuggeschwindigkeit entsprechen.

Aus der WO 2006/113954 A1 geht ein gattungsgemäßes Verfahren sowie elektronische Einrichtungen zur adaptiven Ansteuerung einer pneumatischen Bremsanlage hervor. Es wird vorgeschlagen, zur Anpassung des Bremszylinderdrucks einer pneumatischen Bremsanlage eines Schienenfahrzeuges während eines Bremsvorganges den momentanen Ist-Schlupf zwischen zumindest einem Rad und der Schiene zu ermitteln, weiterhin einen Soll-Schlupf zwischen dem zumindest einen Rad und der Schiene vorzugeben, um entsprechend der Abweichung des Ist-Schlupfes vom vorgegebenen Soll-Schlupf den Bremszylinderdruck derart zu variieren, dass die Abweichung gegen Null geht, zumindest minimiert wird. Auf diese Weise kann der Bremszylinderdruck einer pneumatischen Bremsanlage verändert werden und es sind nur geringe zusätzliche Einstellungen an dem Regelsystem notwendig. Eine adaptive Ansteuerung der pneumatischen Bremsanlage wird erreicht, indem der Soll-Schlupf variabel vorggebbar ist. Hierdurch ist eine ständige Anpassung der Bremscharakteristik an aktuelle Adhäsionsbedingungen im Rad-Schiene-Kontakt möglich.

Eine solche adaptive Ansteuerung ist wünschenswert, da die Kraftschlussbeanspruchung Rad/Schiene empfindlich auf zunehmenden Schlupf reagiert. Der Maximalwert der Kraftschlussbeanspruchung ist bei trockener Schiene am größten und verringert sich deutlich, wenn schlechte Witterungsbedingungen vorherrschen. Findet der Bremsvorgang auf dem ansteigenden Ast einer Schlupfkurve statt, so ist er stabil. Bei Überschreiten des Maximums durch einen zu hohen Schlupfwert wird die Regelstrecke instabil - das Rad verzögert sehr schnell und steht still. Dabei entsteht ein nachteilhaft langer Bremsweg.

Moderne Gleitschutzregelungen pneumatischer Bremsanlagen sollen bei verschiedenen Witterungsbedingungen einerseits den Radstillstand verhindern, andererseits eine Kraftschlusshochausnutzung des Kontakts Rad/Schiene und damit einen möglichst kurzen Bremsweg erreichen.

Herkömmliche Gleitschutzregelungen des Standes der Technik nutzen wissensbasierte Regler, die den aktuellen Zustand anhand einer geeigneten Auswertung von Messgrößen beurteilen, die passende Reaktion aus einer Entscheidungstabelle entnehmen und als Pulsfolgen an die Gleitschutzventile umsetzen. Für jede Schienenfahrzeugserie ist eine individuelle Anpassung der vielen Regelparameter erforderlich.

Gewöhnlich regeln Gleitschutzregelungen auf einem relativen Schlupf von 20-25 %. Dieser Schlupf ist zwar optimal bei feuchten bis leicht verschmutzten Schienen, weil sich eine geringe Verbesserung des Kraftschlusses wegen des großen Schlupfes ergibt. Außerdem wird hierdurch eine reinigende Wirkung der Schiene erzielt. Jedoch kann diese Wirkung dann nicht zur Geltung kommen, wenn sich beispielsweise in den Herbstmonaten durch nasses Laub ein dicker Schmierfilm auf den Schienen bildet, welcher den Kraftschluss Rad/Schiene deutlich reduziert. Dies führt im Herbst gewöhnlich zu verlängerten Bremswegen der Schienenfahrzeuge. Diese große witterungsbedingte Bremswegverlängerung ist deshalb sehr gefährlich, weil dies zu einem Überfahren von Signalen oder Bahnsteigen führen kann.

Es ist daher die Aufgabe der vorliegenden Erfindung, ein Verfahren sowie eine elektronische Einrichtung zur adaptiven Ansteuerung einer pneumatischen Bremsanlage eines Schienenfahrzeuges über eine Gleitschutzregelung zu schaffen, welche in regelungstechnisch einfacher Weise eine an den aktuellen Witterungsbedingungen angepasste sichere Bremsung gewährleistet.

Die Aufgabe wird ausgehend von einem Verfahren gemäß dem Oberbegriff von Anspruch 1 in Verbindung mit dessen kennzeichnenden Merkmalen gelöst. Hinsichtlich einer hiermit korrespondierenden elektronischen Einrichtung wird die Aufgabe durch Anspruch 8 gelöst.

Die jeweils rückbezogenen abhängigen Ansprüche geben vorteilhafte Weiterbildungen der Erfindung wieder.

Die Erfindung schließt die verfahrenstechnische Lehre ein, dass zur Berücksichtigung der Adhäsionsbedingungen im Rad-Schiene-Kontakt zur Bremsung zunächst ein erhöhter relativer Probeschlupf von mindestens 30% erzeugt wird, um dementsprechend eine zeitverzögerte Ansteuerung eines Stellglieds der Gleitschutzregelung vorzugeben, wobei der während des so erzeugten Probeschlupfes auftretende Kraftschlussverlauf Rad-Schiene ermittelt wird, um hieraus die aktuell herrschenden Adhäsionsbedingungen abzuleiten, indem zu den ermittelten herrschenden Adhäsionsbedingungen der optimale Schlupf durch Feststellung des maximalen Kraftschlusses im ermittelten Kraftschlussverlauf Rad-Schiene bestimmt wird, und der so bestimmte optimale relative Schlupf durch die Gleitschutzregelung als Sollwert übernommen wird.

Der Vorteil der erfindungsgemäßen Lösung liegt insbesondere darin, dass sich diese Verfahrensschritte softwaremäßig in eine elektronische Gleitschutzregelung implementieren lassen, was mit wenig Aufwand machbar ist. Die so modifizierte Gleitschutzregelung ist in der Lage, bei ganz unterschiedlichen Witterungsbedingungen eine optimale Bremsung herbeizuführen. Anhand bereits durchgeführter Simulationen konnte festgestellt werden, dass die Kraftschlussausnutzung während der Bremsung nahezu 100% beträgt. Weiterhin erfolgt die Bremsung weitgehend ruckfrei, was für Fahrgäste ein Vorteil hinsichtlich des Reisekomforts darstellt.

Vorzugsweise wird der Gleitschutzregelung als relativer Probeschlupf ein Wert zwischen 30 bis 40 Prozent vorgegeben. Dieser recht große Probeschlupf gestattet ein sicheres Abtasten des Kraftschlussverlaufes.

Die Gleitschutzregelung interpretiert eine stark schmierfilmüberzogene Schiene vorzugsweise durch Auswertung des Kraftschlussverlaufs. Wird ein signifikanter Kraftschlussabfall nach einem Schlupf zwischen 2 bis 3% ermittelt, so kann auf eine solche schmierfilmübezogene Schiene geschlossen werden. Ein derartiger starker Schmierfilm kann beispielsweise durch eine mit Herbstlaub bedeckte Schiene entstehen. Tritt kein Kraftschlussabfall, oder ein sehr geringer Kraftschlussabfall oder sogar ein Zuwachs des Kraftschlusses nach dem Schlupf auf, kann es sich um eine lediglich nasse oder normal verschmutzte Schiene handeln. Ein Eingreifen in die Gleitschutzregelung durch Änderung des Sollwerts für den vorliegenden Schlupf braucht in diesem Falle nicht stattzufinden.

Gemäß einer die Erfindung verbessernden Maßnahme wird vorgeschlagen, dass ein Probeschlupf zur Ermittlung der aktuellen Adhäsionsbedingungen im Rad-Schiene-Kontakt zyklisch wiederholt wird, vorzugsweise alle 5 bis 10 Sekunden, ganz vorzugsweise alle 6 Sekunden. Durch die zyklische Wiederholung des Probeschlupfes in den vorgegebenen Zeitabständen ist die Gleitschutzregelung in der Lage sich an ändernde Adhäsionsbedingungen anzupassen. Denn die Verschmutzung entlang einer Schiene ist niemals homogen.

Gemäß einer die Erfindung verbessernden Maßnahme wird vorgeschlagen, dass der mit Hilfe des erfindungsgemäßen Probeschlupfes ermittelte optimale Schlupf als Grundsignal für einen PID- Regler innerhalb der Gleitschutzregelung verwendet wird. So wird erreicht, dass die Regelung der Bremskraft auf diesen Schlupf hin erfolgt. Da der Ausgang des PID-Algorithmus ein analoges Signal ist und die herkömmlicher Weise als Stellglieder innerhalb der Regelung verwendeten sogenannten Gleitschutzventile nur drei Schaltzustände haben - Belüften, Halten, Entlüften - ist nach der besagten PID- Regelung ein neuer Regelkreis vorgesehen, welcher nach Art einer PD- Fenster-Regelung funktioniert. Hierbei wird die notwendige und die gemessene Bremskraft verglichen.

Gemäß einer anderen die Erfindung verbessernde Maßnahme wird vorgeschlagen, dass bei der PID- Regelung Verstärkerfaktoren vorgesehen sind, welche in Abhängigkeit der Fahrzeuggeschwindigkeit gebildet werden. Bei niedriger Fahrzeuggeschwindigkeit werden kleinere Verstärkerfaktoren gewählt. Dies ist notwendig, da der relative Schlupf und die Regelung auf die Änderung des Radschlupfes bei niedriger Fahrzeuggeschwindigkeit hektischer reagiert. Vorzugsweise werden die Faktoren mit progressiver Kennlinie, also nicht proportional zur Fahrzeuggeschwindigkeit verringert. Es können auch mehrere Kennlinien für Faktorenverläufe definiert werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Figur 1 eine blockschaltbildartige Darstellung einer elektronischen Einrichtung zur adaptiven Ansteuerung einer pneumatischen Bremsanlage eines Schienenfahrzeugs,
Figur 2 eine graphische Darstellung der bei verschiedenen Fahrzeuggeschwindigkeiten vorgegebenen Verstärkerfaktoren für die PID-Regelung des Gleitschutzes,
Figur 3 ein Kraftschlussdiagramm für eine feuchte, verschmutzte Schiene, und
Figur 4 ein Kraftschlussdiagramm für eine herbstlaubbedeckte, stark verschmutzte Schiene.

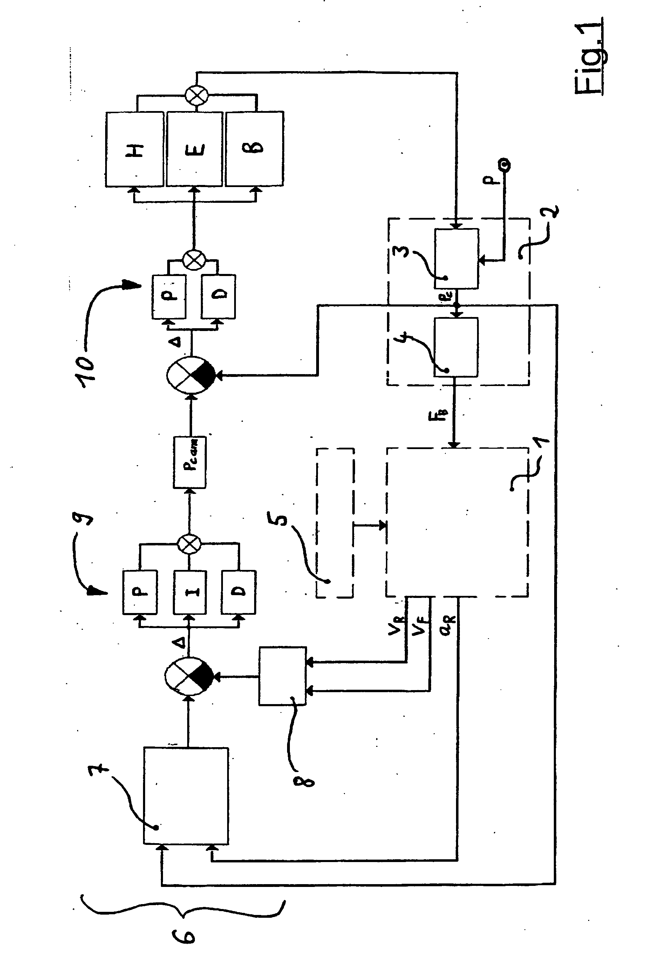

Gemäß Figur 1 umfasst eine Bremsanlage 1 für ein Schienenfahrzeug 2 eine über einen Gleitschutzventil 3 angesteuerte Bremseinheit 4. Die Bremseinheit 4 erzeugt die Bremskraft F_{B} für das Schienenfahrzeug 1. Hierauf wirkt bezüglich einer Bremsung der Rad-Schiene-Kontakt 5 ein. Sensortechnisch wird für das Schienenfahrzeug 1 die Radgeschwindigkeit v_{R} sowie die Fahrzeuggeschwindigkeit v_{F} ermittelt. Außerdem wird die Radbeschleunigung a_{R} ermittelt. All diese ermittelten schienenfahrzeugbezogenen Messwerte gehen einer Gleitschutzregelung 6 zu, welche in Form einer elektronischen Einheit implementiert ist.

Aus einer Kraftschlussermittlungseinheit 7 der Gleitschutzregelung 6 wird ausgehend von der Radbeschleunigung a_{R} sowie dem in der Bremsanlage 2 herrschenden Zylinderdruck p_{c} das Kraftschlussverhältnis geprüft. Hieraus wird als Grundsignal für die Regelung der gewünschte Schlupf ermittelt. Dieser und der durch eine Istschlupfeinheit 8 ermittelte gemessene Schlupf werden verglichen und die Abweichung Δ hiervon wird einer PID-Regelung 9 eingangsseitig zugeführt.

Die Schlupfvorgabe erfolgt unter Berücksichtigung der aktuellen Adhäsionsbedingungen im Rad-Schienen-Kontakt 5 des Schienenfahrzeuges 1, wozu eine zeitverzögerte Ansteuerung des Stellglieds der Gleitschutzregelung 6, hier das Gleitschutzventil 3, anhand eines erhöhten Probeschlupfes von 30% erfolgt, wobei die Gleitschutzregelung 6 den während des zu erzeugten Probeschlupfes auftretenden Kraftschlussverlauf zwischen Rad und Schiene bestimmt, um anhand der herrschenden Adhäsionsbedingungen einen optimalen Schlupf als Sollwert für die Gleitschutzregelung 6 zu ermitteln. Der optimale Schlupf ergibt sich dabei aus dem maximalen Kraftschluss im ermittelten Kraftschlussverlauf zwischen Rad- und Schiene während des Probeschlupfes.

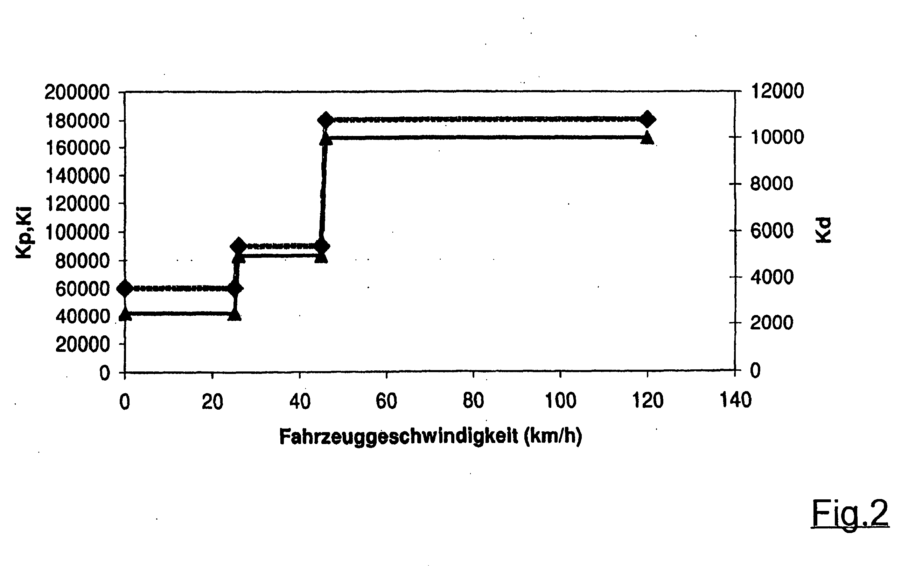

Ausgangsseitig der PID-Regelung 6 wird ein analoges Stellwertsignal erzeugt, welches nachfolgend mit dem tatsächlichen Stellwert des Gleitschutzventils 3 verglichen wird, um eine hieraus resultierende Abweichung eingangsseitig einem PD-Regler 10 zuzuführen. Durch den PD-Regler 10 werden die Schaltzustände Halten H, Entlüften E oder Belüften B für das hieran angeschlossene Gleitschutzventil 3 erzeugt. Durch elektrische Signalvorgabe eines der drei Schaltstellungen an das Gleitschutzventil 3 wird die Regelabweichung ausgeglichen. Gemäß Figur 2 werden bei der Gleitschutzregelung verschiedene Verstärkerfaktoren Kd verwendet, welche abhängig von der Fahrzeuggeschwindigkeit sind. Für jeden Reglerteil gilt hier eine andere Kennlinie wobei die unter Kennlinie (Dreieckssymbol) den D-Teil betrifft und die obere Kennlinie (Quadratssymbol) den P-Teil sowie I-Teil des PID-Reglers betrifft. Unter Berücksichtigung dieser Verstärkerfaktoren Kd wird aus der Schlupfabweichung der gewünschte Bremszylinderdruck berechnet. Sind die Verstärkerfaktoren Kd zu groß gewählt, so wird die Regelung sehr hektisch reagieren; sind diese zu klein, so wird die Regelung zu langsam reagieren. Die Verstärkerfaktoren Kd werden nach den Fahrzeugparametern und passend zu den Bremsen dimensioniert.

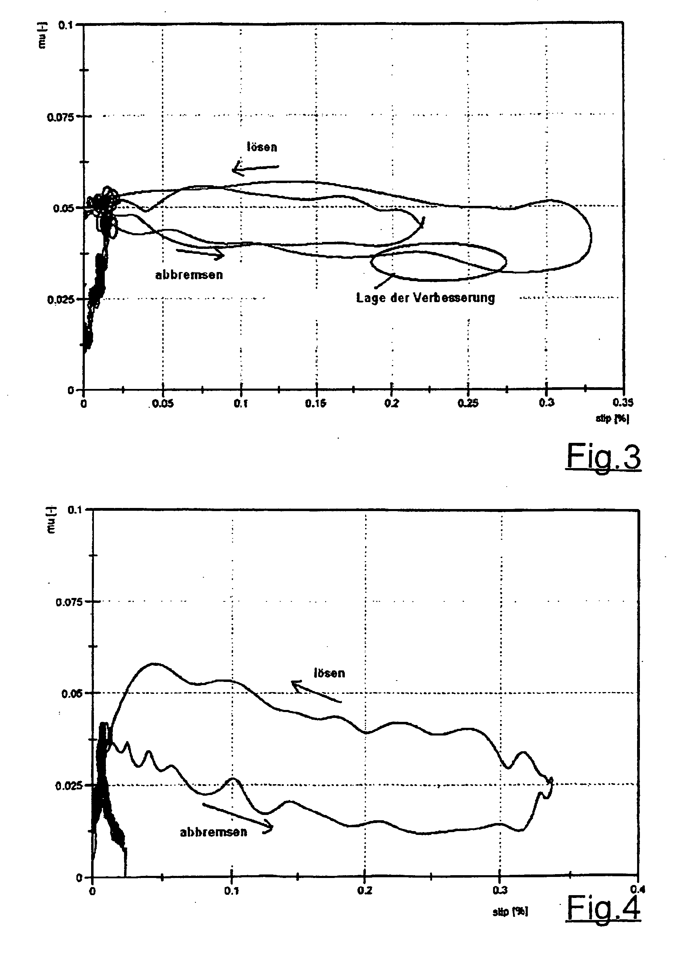

Während im Kraftschlussdiagramm nach Figur 3 das Adhäsionsverhalten im Rad-Schiene-Kontakt bei leicht verschmutzter Schiene dargestellt ist, ist in Figur 4 das Adhäsionsverhalten bei stark verschmutzter, herbstlaubbedeckter Schiene dargestellt.

### Bezugszeichenliste

- **1**: Schienenfahrzeug
- **2**: Bremsanlage
- **3**: Gleitschutzventil
- **4**: Bremszylinder
- **5**: Rad- Schienen- Kontakt
- **6**: Gleitschutzregelung
- **7**: Kraftschlussermittlungseinheit
- **8**: Istschlupfeinheit
- **9**: PID-Regler
- **10**: PD- Regler

- P: Druckquelle
- F_{B}: Bremskraft
- v_{R}: Radgeschwindigkeit
- v_{F}: Fahrzeuggeschwindigkeit
- a_{R}: Radbeschleunigung
- H: Schaltstellung Halten
- E: Schaltstellung Entlüften
- B: Schaltstellung Belüften

## Patentansprüche

1. Verfahren zur adaptiven Ansteuerung einer pneumatischen Bremsanlage (2) eines Schienenfahrzeuges (1) über eine Gleitschutzregelung (6), mit welcher das Blockieren von Rädern des Schienenfahrzeuges (1) bei ungünstigen Adhäsionsbedingungen im Rad-Schiene-Kontakt verhindert wird, indem die Bremsanlage (2) durch die Gleitschutzregelung (6) nach Maßgabe eines vorgebbaren relativen Schlupfs geregelt wird,
**gekennzeichnet durch** die folgenden, die aktuellen Adhäsionsbedingungen im Rad-Schiene-Kontakt berücksichtigenden Verfahrensschritte:
a) Vorgabe eines erhöhten relativen Probeschlupfes von mindestens 30% **durch** eine dementsprechend zeitverzögerte Ansteuerung eines Stellglieds der Gleitschutzregelung (6),
b) Ermittlung des während des so erzeugten Probeschlupfes auftretenden Kraftschlussverlaufs Rad-Schiene zur Feststellung der aktuell herrschenden Adhäsionsbedingungen,
c) Bestimmung des zu diesen herrschenden Adhäsionsbedingungen optimalen Schlupfes durch Feststellung des maximalen Kraftschlusses im ermittelten Kraftschlussverlaufs Rad-Schiene, und
d) Übernahme des so bestimmten optimalen relativen Schlupfes als Sollwert für die Gleitschutzregelung (6).

2. Verfahren nach Anspruch 1,
**dadurch gekennzeichnet, dass** als Probeschlupf ein Wert zwischen 30 bis 40 % vorgegeben wird.

3. Verfahren nach Anspruch 1,
**dadurch gekennzeichnet, dass** bei Ermittlung eines signifikanten Kraftschlussabfalls nach einem Schlupf zwischen 2 bis 3 % dieses Ereignis als schmierfilmüberzogene Schiene interpretiert wird.

4. Verfahren nach Anspruch 1,
**dadurch gekennzeichnet, dass** ein Probeschlupf zur Ermittlung der aktuellen Adhäsionsbedingungen im Rad-Schiene-Kontakt zyklisch alle 5 bis 10 sek. vorgegeben wird.

5. Verfahren nach Anspruch 1,
**dadurch gekennzeichnet, dass** der mit Hilfe des Probeschlupfes ermittelte optimale Schlupf als Grundsignal für einen PID-Regler (9) innerhalb der Gleitschutzregelung 0 verwendet wird.

6. Verfahren nach Anspruch 1,
**dadurch gekennzeichnet, dass** Verstärkerfaktoren des PID-Reglers (9) in Abhängigkeit der Fahrzeuggeschwindigkeit gebildet werden.

7. Verfahren nach Anspruch 1,
**dadurch gekennzeichnet, dass** die Verstärkerfaktoren mit abnehmender Fahrzeuggeschwindigkeit mit progressiver Kennlinie verringert werden.

8. Elektronische Einrichtung zur adaptiven Ansteuerung einer pneumatischen Bremsanlage (2) eines Schienenfahrzeuges (1) über eine Gleitschutzregelung (6), die ein Blockieren von Rädern des Schienenfahrzeuges (1) bei ungünstigen Adhäsionsbedingungen im Rad-Schiene-Kontakt (5) verhindert, indem die Gleitschutzregelung (6) die Bremsanlage (2) nach Maßgabe eines vorgebbaren Schlupfparameterbereichs regelt,
**dadurch gekennzeichnet, dass** eine zeitverzögerte Ansteuerung des Stellglieds der Gleitschutzregelung (6) einen erhöhten Probeschlupfes Rad-Schiene von mindestens 30% erzeugt, wobei Mittel zur Feststellung des während des so erzeugten Probeschlupfes auftretenden Kraftschlussverlaufs Rad-Schiene vorgesehen sind, woraus der zu diesen herrschenden Adhäsionsbedingungen optimale Schlupf aus dem maximalen Kraftschluss im ermittelten Kraftschlussverlaufs Rad-Schiene feststellbar ist, den die Gleitschutzregelung (6) als Eingangswert übernimmt.

9. Elektronische Einrichtung nach Anspruch 8,
**dadurch gekennzeichnet, dass** das Stellglied der Gleitschutzregelung (6) als ein Gleitschutzventil (3) ausgebildet ist.

10. Elektronische Einrichtung nach Anspruch 9,
**dadurch gekennzeichnet, dass** dem PID-Regler (9) ein PD-Fenster-Regler (10) zur Ansteuerung des Gleitschutzventils (3) mit den Zuständen Belüften, Halten und Entlüften nachgeschaltet ist.

## Claims

1. Method for the adaptive control of a pneumatic braking unit (2) of a rail vehicle (1) by means of an anti-skid regulation system (6), with which the locking of wheels of the rail vehicle (1) is prevented when grip conditions in the wheel-rail contact area are unfavourable, in that the braking unit (2) is regulated by the anti-skid regulation system (6) in accordance with a specifiable relative slip value,
**characterised by** the following process steps that take into account the actual grip conditions in the wheel-rail contact area:
a) specification of an elevated relative trial slip of at least 30% by a corresponding, time-delayed actuation of a control element of the anti-skid regulation system (6),
b) determination of the wheel-rail friction variation occurring during the said trial slip so produced, in order to establish the actual grip conditions prevailing,
c) determination of the optimal slip for these prevailing grip conditions by determining the maximum friction force in the wheel-rail friction variation determined,
d) adoption of the optimal relative slip so determined as the nominal value for the anti-skid regulation system (6).

2. Method according to Claim 1,
**characterised in that** as the trial slip, a value between 30 and 40% is specified.

3. Method according to Claim 1,
**characterised in that** if a significant friction force reduction after a slip between 2 and 3% is determined, this event is interpreted as a rail covered by a lubricating film.

4. Method according to Claim 1,
**characterised in that** a trial slip for determining the current grip conditions in the wheel-rail contact area is specified every 5 to 10 seconds.

5. Method according to Claim 1,
**characterised in that** the optimal slip determined with the help of the trial slip is used as a basis signal for a PID regulator (9) within the anti-skid regulation system (6).

6. Method according to Claim 1,
**characterised in that** the amplification factor of the PID regulator (9) is determined as a function of the speed of the vehicle.

7. Method according to Claim 1,
**characterised in that** with decreasing vehicle speed the amplification factor is reduced in accordance with a progressive characteristic curve.

8. Electronic device for the adaptive control of a pneumatic braking unit (2) of a rail vehicle (1) by means of an anti-skid regulation system (6), which prevents locking of wheels of the rail vehicle (1) when grip conditions in the wheel-rail contact area (5) are unfavourable, in that the anti-skid regulation system (6) regulates the braking unit (2) in accordance with a specifiable slip parameter range,
**characterised in that** a time-delayed actuation of the control element of the anti-skid regulation system (6) produces an elevated wheel-rail trial slip of at least 30%, and means are provided for determining the wheel-rail friction variation occurring during the trial slip so produced, from which the optimal slip for the prevailing grip conditions can be determined from the maximum friction force in the wheel-rail friction variation determined, which the anti-skid regulation system (6) then adopts as an input value.

9. Electronic device according to Claim 8,
**characterised in that** the control element of the anti-skid regulation system (6) is in the form of an anti-skid valve (3).

10. Electronic device according to Claim 9,
**characterised in that** downstream from the PID regulator (9) is connected a PD-window regulator (10) for actuating the antiskid valve (3) to the conditions pressurize, hold and vent.

## Revendications

1. Procédé de commande adaptative d'une installation (2) pneumatique de freinage d'un véhicule (1) sur rail, par une régulation (6) d'anti-enrayage, par laquelle le blocage de roues du véhicule (1) sur rail est empêché lors de conditions défavorables dans le contact roue-rail, par le fait que l'installation (2) de freinage est réglée par la régulation (6) d'anti-enrayage en fonction d'un glissement relatif pouvant être prescrit,
**caractérisé par** les stades de procédés suivants, prenant en considération les conditions d'adhérence présentes dans le contact roue-rail :
a) prescription d'une augmentation d'un glissement d'épreuve relatif d'au moins 30%, par une commande, retardée dans le temps en conséquence, d'un élément de réglage de la régulation (6) d'anti-enrayage,
b) détermination de la courbe de la force d'adhérence roue-rail se produisant pendant le glissement d'épreuve ainsi produit, pour la fixation des conditions d'adhérence régnant présentement,
c) détermination du glissement le meilleur pour ces conditions d'adhérence régnant, par fixation de la force d'adhérence maximum dans la courbe de force d'adhérence déterminée roue-rail, et
d) prise du glissement relatif le meilleur ainsi déterminé comme valeur de consigne pour la régulation (6) d'anti-enrayage.

2. Procédé suivant la revendication 1,
**caractérisé en ce que**, l'on prescrit comme glissement d'épreuve une valeur comprise entre 30 et 40%.

3. Procédé suivant la revendication 1,
**caractérisé en ce que** lors de la détermination d'une diminution significative de la force d'adhérence après un glissement compris entre 2 et 3%, on interprète cet évènement comme un rail revêtu d'un film lubrifiant.

4. Procédé suivant la revendication 1,
**caractérisé en ce que** l'on prescrit un glissement d'épreuve pour la détermination des conditions d'adhérences présentes dans le contact rail-roue cycliquement toutes les 5 à 10 secondes.

5. Procédé suivant la revendication 1,
**caractérisé en ce que** l'on utilise le glissement le meilleur déterminé à l'aide du glissement d'épreuve comme signal de base pour un régulateur (9) PID au sein de la régulation (6) d'anti-enrayage.

6. Procédé suivant la revendication 1,
**caractérisé en ce que** l'on forme les facteurs d'amplificateur du régulateur (9) PID en fonction de la vitesse du véhicule.

7. Procédé suivant la revendication 1,
**caractérisé en ce que** l'on diminue suivant une caractéristique progressive les facteurs d'amplificateur au fur et à mesure que la vitesse du véhicule diminue.

8. Dispositif électronique pour la commande adaptative d'une installation (2) pneumatique de freinage d'un véhicule (1) sur rail, par une régulation (6) d'anti-enrayage qui empêche un blocage de roues du véhicule (1) sur rail, si les conditions d'adhérence dans le contact (5) roue-rail sont défavorables, par le fait que la régulation (6) d'anti-enrayage règle l'installation (2) de freinage en fonction d'une plage de paramètre de glissement pouvant être prescrite,
**caractérisé en ce qu'**une commande retardée dans le temps de l'élément de réglage de la régulation (6) d'anti-enrayage produit une augmentation du glissement d'épreuve roue-rail d'au moins 30%, des moyens de fixation de la courbe de force d'adhérence roue-rail se produisant pendant le glissement ainsi produit étant prévus, moyens à partir desquels le glissement le meilleur pour ces conditions d'adhérence qui règnent peut être fixé dans la courbe de force d'adhérence roue-rail déterminée, glissement que la régulation (6) d'anti-enrayage prend comme valeur d'entrée.

9. Dispositif électronique suivant la revendication 8, **caractérisé en ce que** l'élément de réglage de la régulation (6) d'anti-enrayage est constitué sous la forme d'une vanne (9) d'anti-enrayage.

10. Dispositif électronique suivant la revendication 9, **caractérisé en ce qu'**un régulateur (10) de fenêtre PD pour la commande de la vanne (9) d'anti-enrayage est monté en aval du régulateur (9) PID en ayant les états, alimentation en air, maintien et purge d'air.
